(19) Europäisches Patentamt
European Patent Office
Office européen des brevets

(11) **EP 2 898 306 B1**

(12) **FASCICULE DE BREVET EUROPEEN**

(45) Date de publication et mention
de la délivrance du brevet:
**02.11.2016  Bulletin 2016/44**

(51) Int Cl.:
***G01L 23/08*** *(2006.01)*    ***G01L 23/22*** *(2006.01)*

(21) Numéro de dépôt: **13759440.4**

(22) Date de dépôt: **26.08.2013**

(86) Numéro de dépôt international:
**PCT/EP2013/002564**

(87) Numéro de publication internationale:
**WO 2014/044352 (27.03.2014 Gazette 2014/13)**

(54) **PROCEDE DE TRAITEMENT D'UN SIGNAL D'UN DISPOSITIF DE MESURE DE PRESSION AU SEIN D'UN MOTEUR A COMBUSTION INTERNE**

SIGNALVERARBEITUNGSVERFAHREN FÜR EIN DRUCKMESSUNGSEINRICHTUNG IN EINE VERBRENNUNGSMASCHINE

SIGNAL PROCESSING METHOD FOR A PRESSURE MEASURING DEVICE LOCATED WITHIN AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.09.2012  FR 1258828**

(43) Date de publication de la demande:
**29.07.2015  Bulletin 2015/31**

(73) Titulaires:
• **Continental Automotive France Intellectual Property**
  **31100 Toulouse (FR)**
• **Continental Automotive GmbH**
  **30165 Hannover (DE)**

(72) Inventeurs:
• **LANDREVIE, Laurent**
  **31270 Villeneuve Tolosane (FR)**
• **TONON, Fabrice**
  **31500 Toulouse (FR)**

(56) Documents cités:
**EP-A1- 1 574 834    US-A1- 2012 060 595**

**Description**

L'invention concerne un procédé de traitement d'un signal d'un dispositif de mesure de pression au sein d'un moteur à combustion interne.

Un moteur à combustion interne comporte de manière classique des cylindres dans lesquels coulissent des pistons définissant chacun une chambre de combustion dans laquelle du carburant et du comburant sont introduits afin de réaliser la combustion du mélange. Le moteur permet la transformation de l'énergie dégagée par cette combustion en énergie mécanique.

Il est connu d'équiper des moteurs à combustion interne de dispositifs de mesure de pression comprenant des capteurs de mesure de pression et de l'électronique associée, mesurant la pression au sein des chambres de combustion des cylindres. La valeur de cette pression permet à un système électronique du type calculateur électronique moteur (ou ECU : « Engine Control Unit » en anglais), embarqué dans un véhicule automobile équipé d'un tel moteur à combustion interne, d'ajuster au mieux les paramètres de réglages dudit moteur tels que les paramètres d'injection de carburant ou de post traitement des émissions polluantes.

De tels capteurs de mesure de pression peuvent être des capteurs piézoélectriques qui, par l'intermédiaire des variations des charges électriques de l'élément sensible piézo-électrique soumis à une pression, fournissent de manière relative une indication de la pression régnant dans le cylindre. Le capteur de mesure de pression fournit alors une tension représentative de ces variations de pression. Généralement, le signal de tension fourni par ce type de capteurs de mesure de pression devrait sensiblement avoir la forme d'une droite de valeur constante (par exemple y = 0 volts) et répétable sur laquelle viennent s'intercaler périodiquement des pics de tension représentant les pics de pression qui se déroulent à l'intérieur de la chambre de combustion lors des phases de compression et de combustion dans la chambre de combustion du cylindre.

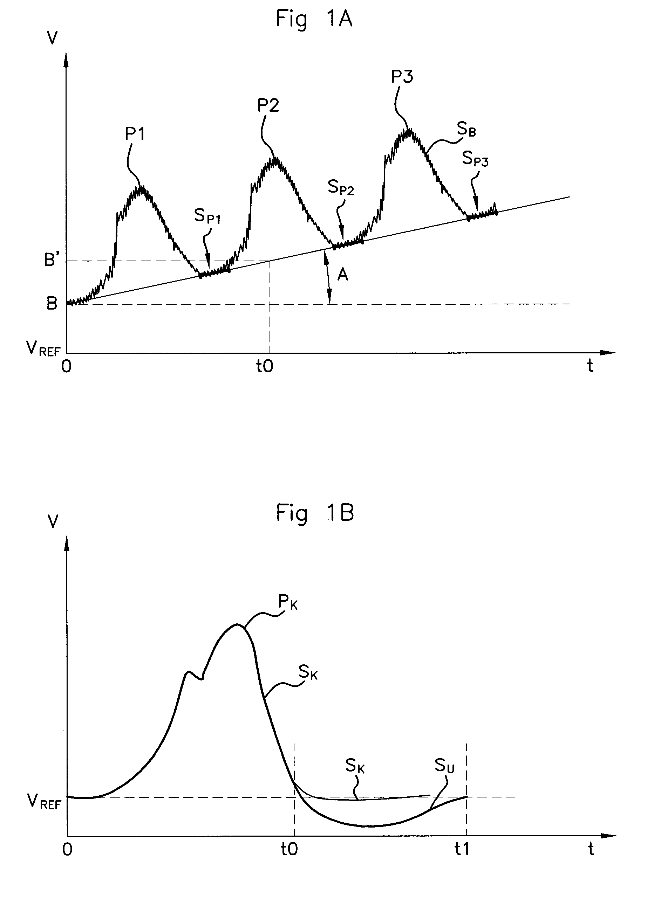

Cependant, ce signal de tension est sujet à des bruits et dérives dus, entre autres, aux phénomènes de pyroélectricité et/ou de vibrations subis par ledit capteur de mesure de pression. Le signal délivré par le capteur de mesure de pression est donc différent de la courbe réelle de la pression régnant à l'intérieur de la chambre de combustion du cylindre. En dehors des pics de pression, il n'a pas la forme d'une droite de valeur constante et répétable mais au contraire, il a sensiblement la forme d'une droite ayant une pente (c'est-à-dire dont les valeurs dérivent dans le temps), créant un décalage ou dérive (appelé « offset » en anglais) par rapport à une valeur de référence. Ceci est illustré à la figure 1A. Le signal $S_B$ de pression selon l'unité de temps t, est bruité et il dérive selon une droite de pente A, créant ainsi un décalage ou dérive (offset) par rapport à une valeur de référence $V_{REF}$ qui évolue selon le temps t, de valeur B à t = 0 et de valeur B' à t0 (cf. figure 1A). Le signal $S_B$ peut donc être assimilé à une alternance de phases dites « de plateau » $S_{P1}$, $S_{P2}$, $S_{P3}$, pendant lesquelles la tension est décalée par rapport à une valeur de référence $V_{REF}$ et évolue selon une fonction de pente A sensiblement linéaire en fonction du temps, et de pics de tension P1, P2, P3 représentatifs des pics de pression de combustion.

Afin que le signal de pression fourni par de tels capteurs de mesure de pression soit utilisable, un traitement du signal est donc nécessaire. En l'occurrence le dispositif de mesure de pression comprend un filtre et un algorithme visant à supprimer cette dérive, appelé aussi algorithme de correction d'« offset » qui sont appliqués au signal de tension. Le filtre permet d'éliminer les bruits du signal et l'algorithme de correction de dérive permet de recentrer la valeur de référence de la pression, en dehors des pics de pression, à une valeur de référence $V_{REF}$ constante et répétable. Ce filtre et cet algorithme de correction de dérive sont intégrés dans une unité de traitement, faisant partie du dispositif de mesure de pression, et située dans un circuit intégré dédié appelé « ASIC » (« Application Specific Integrated Circuit », en anglais) associé et relié au capteur de mesure de pression. Le filtre et la correction de dérive permettent, à partir du signal ainsi traité, de déterminer de manière précise la valeur de la pression à l'intérieur de la chambre de combustion du cylindre et donc d'ajuster en proportion les paramètres de réglage de fonctionnement du moteur à combustion interne.

Un tel procédé est connu de l'art antérieur. Par exemple, il est connu d'utiliser un filtre de Kalman reposant sur une méthode récursive de correction d'erreur entre un signal et sa prédiction atténuée par un gain. La prédiction du signal est alors calculée à partir du signal filtré et corrigé à l'instant de mesure précédent. Plus particulièrement et selon le document FR 2 938 645 A1, il est connu d'utiliser deux filtres de Kalman : un filtre de Kalman dit « rapide » c'est-à-dire comportant des gains de pente et de constante de valeurs élevées pour les points appartenant aux pics de pression, et un filtre de Kalman dit « lent », c'est-à-dire comportant des gains de pente et de constante de valeurs faibles pour la détermination de la dérive du signal, c'est-à-dire de l'offset pendant les phases de plateaux. Le procédé décrit dans FR 2 938 645 A1 corrige alors chaque point en fonction de leur appartenance ou non aux pics de pression détectés selon le filtre de Kalman rapide et selon la valeur de l'offset déterminé selon le filtre de Kalman lent. Cependant, les inconvénients d'un tel procédé de traitement du signal sont les suivants :

- puisque chaque point du signal est traité par un calcul complexe utilisant un filtre de Kalman, un tel procédé de traitement du signal est lourd et utilise une taille importante de la mémoire de l'ASIC,
- ce procédé est difficile à calibrer, puisqu'il comporte quatre variables à paramétrer : un gain de pente et de constante pour le filtre de Kalman rapide et un autre gain de pente et un autre gain de constante pour le filtre de Kalman lent,

- en dessous de 1000 tours/min de régime moteur, le signal traité issu de ce procédé de traitement est déformé de manière non négligeable et donc difficilement exploitable.

Ceci est illustré à la figure 1B. Le signal de pression traité $S_K$ selon le procédé de traitement de signal décrit dans FR 2 938 645 A1, a une valeur de référence de pression $V_{REF}$ constante, et ne dérive plus dans le temps t. Cependant, ce procédé de traitement de signal crée, après le pic de pression $P_K$, entre les instants t0 et t1, une sous estimation $S_u$ de la valeur de la pression régnant dans le cylindre par rapport à la courbe réelle $S_R$.

Le document EP 1 574 834 A1 divulgue aussi un procédé de traitement d'un signal d'un dispositif de mesure de pression au sein d'un moteur à combustion interne.

L'invention propose donc de pallier ces inconvénients et propose un procédé de traitement du signal permettant de corriger la dérive du signal n'engendrant pas de déformation dans le signal traité, facile à mettre en oeuvre et à calibrer et nécessitant une taille réduite de mémoire par rapport au procédé de l'art antérieur.

L'invention propose un procédé de traitement d'un signal d'un dispositif de mesure de pression au sein d'un moteur à combustion interne, ledit dispositif comprenant :

- un capteur de mesure de pression fournissant en sortie un signal de tension, représentatif de la pression au sein du moteur à combustion interne, le signal comprenant des phases dites « de plateau » pendant lesquelles la tension évolue selon une fonction sensiblement linéaire en fonction du temps, et des pics de tension, représentatifs des pics de pression de combustion,
- une unité de traitement reliée audit capteur de mesure de pression.

Selon un premier mode de réalisation, le procédé comprend les étapes suivantes :

I. Acquisition des valeurs du signal de pression par l'unité de traitement,
II. Détection par l'unité de traitement des pics de tension du signal, représentatifs des pics de pression de combustion.

Le procédé se caractérise en ce qu'il comprend en outre les étapes suivantes :

III. Calcul par l'unité de traitement d'une première durée entre un premier instant correspondant à un premier pic de pression de combustion et un deuxième instant correspondant à un deuxième pic de pression de combustion, consécutif au premier pic de pression de combustion,

IV. Calcul par l'unité de traitement d'un instant de début de correction définit par :

$$t_{c1} = t1 + x1 * Dt1$$

Avec :

$t_{c1}$ : instant de début de correction,
t1 : deuxième instant correspondant à un deuxième pic de pression de combustion,
Dt1 : première durée entre un premier instant (t0) correspondant à un premier pic de pression de combustion (P0) et un deuxième instant (t1) correspondant à un deuxième pic de pression de combustion (P1),
$t_{c2}$ : instant de fin de correction,
et x1 première constante de valeur variant entre 0,1 et 0,9.

V. Mesure par l'unité de traitement d'une valeur du signal à l'instant de début de correction,
VI. Correction par l'unité de traitement du signal, à partir de l'instant de début de correction par rapport à une valeur de référence et obtention d'un premier signal traité tel que :

$$S = S_B - V_{OFF1} + V_{REF}$$

Avec $S_B$ : signal en sortie du capteur de mesure de pression,
$V_{OFF1}$ : valeur du signal à l'instant de début correction ($t_{c1}$),
$V_{REF}$ : valeur de référence.

Selon un deuxième mode de réalisation, les étapes I à VI sont répétées, et :

- lors de l'étape III : calcul par l'unité de traitement d'une deuxième durée entre le deuxième instant correspondant au deuxième pic de pression de combustion et un troisième instant correspondant à un troisième pic de pression de combustion, consécutif au deuxième pic de pression de combustion,
- lors de l'étape IV : Calcul par l'unité de traitement d'un deuxième instant de début de correction définit par :

$$t_{c2} = t2 + x2 * Dt2$$

Avec :

$t_{c2}$ : deuxième instant de début de correction,
t2 : troisième instant correspondant à un troisième pic de pression de combustion,

Dt2: deuxième durée entre le deuxième instant et le troisième instant,

et x2 une deuxième constante de valeur variant entre 0,1 et 0,9.

- lors de l'étape V : Mesure par l'unité de traitement d'une deuxième valeur du signal au deuxième instant de début de correction, et calcul par l'unité de traitement d'une pente, définie par :

$$A = \frac{(V_{OFF2} - V_{OFF1})}{(t_{c2} - t_{c1})}$$

Avec $V_{OFF2}$ : valeur du signal au deuxième instant de début de correction,

$t_{c2}$ : deuxième instant de début de correction,

- lors de l'étape VI : correction du signal par l'unité de traitement, à un instant donné i, situé après le deuxième instant de début de correction et obtention d'un deuxième signal traité tel que :

$$S'(i) = S(i) - A * i$$

Avec S'(i) : deuxième signal traité à l'instant t,
S (i) : premier signal traité à l'instant t.

Dans un autre mode de réalisation la valeur de la deuxième constante x2 est égale à la valeur de la première constante x1.

Dans un mode de réalisation préférentiel du procédé de traitement selon l'invention :

- l'étape II consiste en la dérivation du deuxième ordre des valeurs du signal par rapport à une unité de temps, et obtention d'un signal dérivé, tel que :

$$S_D = \frac{dS_B^2}{dt^2}$$

avec $S_D$ : signal dérivé,
- l'étape III consiste en :

  • la détection par l'unité de traitement de deux instants consécutifs, un premier instant et un deuxième instant correspondant au passage des valeurs du signal dérivé en dessous d'un seuil,
  • le calcul par l'unité de traitement d'une durée entre le premier instant et le deuxième instant.

Judicieusement, la valeur du seuil est déterminée de telle sorte qu'au premier instant et au deuxième instant la valeur du signal est sensiblement maximale.

Avantageusement, le signal est un signal filtré et échantillonné par rapport au temps.

Préférentiellement, la valeur de la première constante x1 est déterminée à un régime moteur maximal, par exemple de 5000 tours /min. Alternativement la valeur de la première constante x1 est comprise entre 0,4 et 0,7.

D'autres objets, caractéristiques et avantages de l'invention apparaîtront à la lecture de la description qui va suivre à titre d'exemple non limitatif et à l'examen des dessins annexés dans lesquels :

- la figure 1a, déjà expliquée précédemment, représente le signal en sortie du capteur sans procédé de traitement du signal,

- la figure 1b, déjà expliquée précédemment, représente le signal traité par le procédé de traitement du signal de l'art antérieur,

- la figure 2 représente le premier signal traité par le procédé de traitement du signal selon l'invention,

- la figure 3 représente le deuxième signal traité par le procédé de traitement du signal selon l'invention,

- la figure 4 est une vue schématique représentant le dispositif de mesure de pression cylindre selon l'invention,

- la figure 5 représente en haut de la figure, le signal en sortie du capteur sans procédé de traitement du signal et en bas de la figure, le signal à l'étape III du procédé de traitement du signal selon un mode préférentiel de réalisation de l'invention.

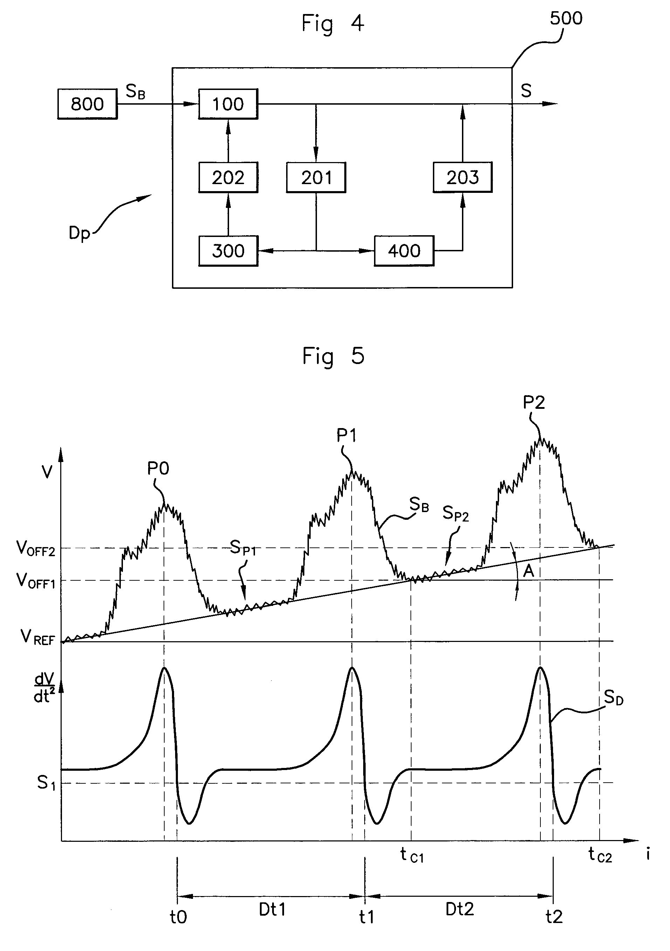

Comme illustré à la figure 4, le dispositif de mesure de pression $D_P$ selon l'invention comprend un capteur de mesure de pression 800 relié à une unité de traitement 500.

Comme illustré à la figure 4, le signal $S_B$ en sortie du capteur de mesure de pression 800 est acquis et traité par l'unité de traitement 500 intégrée dans un circuit intégré (ASIC, non représenté à la figure 4) afin de délivrer un signal traité S. Cette unité de traitement 500 comprend généralement :

- un amplificateur de charges 100,

- un convertisseur analogique/numérique 201, relié à l'amplificateur de charges 100 et relié d'une part à :

  • des moyens de filtrage 300 permettant de filtrer les bruits présents sur le signal $S_B$, reliés à un convertisseur numérique/analogique 202, lui-même relié à l'amplificateur de charge 100. Les moyens de filtrage 300 filtrent les bruits présents sur le signal $S_B$ en ajoutant ou en enlevant des charges de compensation au signal $S_B$ en entrée de l'amplificateur de charges 100,

et d'autre part à :

- des moyens de traitement du signal 400, comprenant généralement un algorithme de correction de dérive, relié à un convertisseur numérique/analogique 203, délivrant un signal traité S à un calculateur électronique (non représenté).

Cette unité de traitement 500 est connue de l'homme du métier et ne sera pas plus détaillée ici.

Comme expliqué précédemment, le signal $S_B$ provenant du capteur de pression 800 peut être assimilé à une alternance de phases dites « de plateau $S_{P1}$, $S_{P2}$, $S_{P3}$ (cf. figure 1A) pendant lesquelles la tension est décalée par rapport à une valeur de référence $V_{REF}$ et évolue selon une fonction de pente A sensiblement linéaire en fonction du temps, et de pics de tension P1, P2, P3 représentatifs des pics de pression de combustion (cf. figure 1A).

Selon l'art antérieur, l'algorithme de correction de dérive comprend en outre un algorithme de détection des pics de tension représentatifs des pics de pression de combustion.

Cette détection est nécessaire afin de distinguer les valeurs de tension appartenant aux phases dites de plateau, des valeurs de tension appartenant aux pics de pression de combustion. En effet, la détermination de la dérive du signal n'est possible que pendant les phases de plateau, les valeurs anormalement élevées des pics de pression de combustion ne permettant pas la détermination de la dérive.

Cet algorithme de détection des pics de tension représentatifs des pics de pression de combustion est basé par exemple, sur l'évolution de la pente du signal d'un instant de mesure t au suivant t+1. Toute pente anormalement et soudainement élevée est alors significative d'un début de pic de pression de combustion. Bien sûr, d'autres algorithmes de détection des pics de tension du signal sont possibles et connus de l'homme du métier et ne seront pas plus détaillés ici.

Afin d'améliorer cette détection, il est connu de filtrer au préalable, le signal $S_B$, en utilisant un filtre passe bas afin d'ôter des perturbations et bruits potentiels. Il est aussi connu de l'échantillonner à une fréquence moins élevée que la fréquence d'acquisition du signal en sortie du capteur 800 par l'unité de traitement 500. Cet échantillonnage permet de réduire la taille mémoire de l'ASIC dédiée au procédé de traitement du signal $S_B$. Le filtre et l'échantillonnage peuvent être réalisés par les moyens de filtrage 300.

L'invention propose un procédé de traitement du signal $S_B$ du dispositif de mesure de pression $D_P$. Ce procédé se présente sous la forme d'un algorithme pouvant être intégré, par exemple, et de manière non limitative dans les moyens de traitement du signal 400 décrits ci-dessus.

Le procédé de traitement du signal $S_B$ vise à corriger la dérive du signal par rapport à la valeur de référence $V_{REF}$.

Selon l'invention, les valeurs du signal $S_B$ sont d'abord acquises par l'unité de traitement 500 (étape I) et les pics de tension du signal $S_B$ représentatifs de pics de pression de combustion sont détectés (étape II). Comme expliqué précédemment, ces deux étapes sont connues de l'art antérieur.

Selon un premier mode de réalisation de l'invention, l'étape suivante (étape III) consiste au calcul d'une première durée Dt1 entre un premier instant t0 correspondant à un premier pic de pression de combustion P0 et un deuxième instant t1 correspondant à un deuxième pic de pression de combustion P1, consécutif au premier pic de pression de combustion P0.

L'invention propose alors de calculer (étape IV) un instant de début de correction $t_{c1}$, du signal $S_B$ défini par :

$$t_{c1} = t1 + x1 * Dt1$$

Avec x1 une première constante de valeur variant entre 0,1 et 0,9.

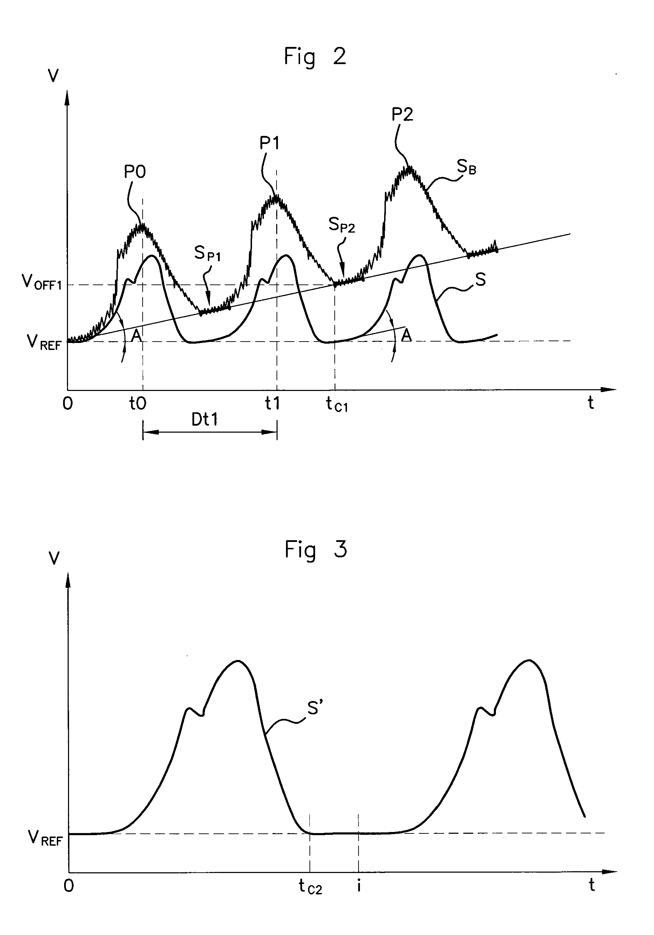

L'instant de début de correction $t_{c1}$ est donc situé après le deuxième pic de pression de combustion P1. En choisissant de façon adéquate la valeur de la première constante x1, l'instant de début de correction commence pendant une phase de plateau du signal $S_B$ avant un troisième pic de combustion P2 (cf. Figure 2).

Ainsi, selon l'invention, la première durée Dt1 calculée entre deux pics de pression de combustion consécutifs, un premier pic de pression de combustion P0 et un deuxième pic de pression de combustion P1 est utilisée afin de corriger le signal $S_B$ après le deuxième pic de pression de combustion P1 et ceci indépendamment de l'évolution du régime moteur.

L'invention est basée sur la première hypothèse suivante: la valeur du régime moteur est supposée être quasi constante entre trois pics de pression de combustion successifs (P0, P1, P2). Ainsi, l'hypothèse fondamentale de l'invention consiste à supposer que la valeur du régime moteur entre le deuxième pic de pression de combustion P1 et le troisième pic de pression de combustion P2, est égale à la valeur du régime moteur entre le premier pic de pression de combustion P0 et le deuxième pic de pression de combustion P1. Par conséquent, la première durée Dt1 calculée entre les deux premiers pics de pression de combustion (P0, P1) peut donc être utilisée pour estimer la durée entre le deuxième pic de pression de combustion P1 et le pic de pression de combustion suivant, c'est-à-dire le troisième pic de pression de combustion P2. En d'autres termes, cela permet d'identifier la phase de plateau entre ces deux pics de combustion, là ou une correction est possible. Ceci est expliqué plus loin.

L'invention se distingue donc des procédés de traitement du signal de l'art antérieur, dans lesquels, la valeur instantanée du régime moteur était prise en compte à chaque point du signal lors de la correction du signal $S_B$ audit point.

Cependant, en réalité, la première durée Dt1 entre les deux pics de pression (P0, P1) varie en fonction du régime moteur. Cette première durée Dt1 est minimale pour un régime moteur maximal. Judicieusement, l'invention propose donc de fixer la valeur de la première constante x1 à un régime maximal du moteur afin de s'assurer que l'instant de début de correction $t_{c1}$ ainsi déterminé se situe bien dans une phase de plateau du signal $S_B$ pour tout régime moteur inférieur au régime maximal et qu'il ne se situe pas soit dans la fin du deuxième pic de pression de combustion P1, soit dans le début du troisième pic de pression de combustion P2. Par exemple, l'invention propose selon un mode de réalisation préférentiel, de fixer la valeur de la première constante x1 entre 0,4 et 0,7 ou alternativement de fixer sa valeur à un régime moteur N de valeur maximale N = 5000 tours/min.

Lors de l'étape suivante, l'invention propose de mesurer la valeur du signal $V_{OFF1}$ à l'instant de début de correction $t_{c1}$ (étape V) et de corriger le signal $S_B$ à partir de l'instant de début de correction $t_{c1}$ par rapport à une valeur de référence $V_{REF}$ afin d'obtenir un premier signal traité S tel que :

$$S = S_B - V_{OFF1} + V_{REF}$$

La valeur de référence $V_{REF}$ pouvant être égale à zéro.

L'invention repose donc sur une 2ème hypothèse: la dérive du signal $S_B$ est en majeure partie due à des phénomènes thermiques (pyroélectricité) d'une inertie relativement lente. Ainsi, il est possible de n'utiliser qu'une seule valeur de signal $V_{OFF1}$ mesurée à l'instant de début de correction tc1 et de corriger à partir de cette valeur, l'ensemble des points du signal $S_B$ se situant après l'instant de début de correction $t_{c1}$, qu'ils appartiennent à une phase de plateau ou à un pic de combustion.

Il est donc primordial que l'instant de début de correction tc1 calculé à l'étape IV se situe dans une phase de plateau entre deux pics de pression de combustion, afin que la valeur du signal $V_{OFF1}$ mesurée au même instant soit représentative de la dérive du signal $S_B$ et non d'un pic de pression de combustion. C'est pour cette raison, que la valeur de la première constante x1 doit être choisie de manière judicieuse (comme expliqué précédemment), afin que l'instant de début de correction tc1 se situe toujours dans une phase de plateau et ceci quelque soit la valeur du régime moteur.

La figure 2 représente selon le temps t, le signal traité S. Ce signal traité S dans son ensemble ne dérive plus. La pente du signal dans son ensemble est égale à zéro. Cependant, les valeurs corrigées se situant après l'instant de début de correction $t_{c1}$, évoluent selon une fonction linéaire de pente A.

Dans un deuxième mode de réalisation de l'invention, cette pente A est aussi corrigée (cf. figures 3 et 5).

Dans ce deuxième mode de réalisation de l'invention, les étapes I à IV sont répétées entre le deuxième pic de pression P1 et le troisième pic de pression P2. Ainsi :

- lors de l'étape III : l'unité de traitement 500 calcule une deuxième durée Dt2 entre le deuxième instant t1 correspondant au deuxième pic de pression de combustion P1 et un troisième instant t2 correspondant à un troisième pic de pression de combustion P2, consécutif au deuxième pic de pression de combustion P1,

- lors de l'étape IV : l'unité de traitement 500 calcule un deuxième instant de début de correction $t_{c2}$ définit par :

$$t_{c2} = t2 + x2 * Dt2$$

Avec :

$t_{c2}$ : deuxième instant de début de correction,

t2 : troisième instant correspondant au troisième pic de pression de combustion,

Dt2: deuxième durée entre le deuxième instant t1 et le troisième instant t2,

et x2 deuxième constante de valeur variant entre 0,1 et 0,9.

- lors de l'étape V : L'unité de traitement 500 mesure une deuxième valeur du signal $V_{OFF2}$ au deuxième instant de début correction $t_{c2}$, et calcule une pente A, définie par :

$$A = \frac{(V_{OFF2} - V_{OFF1})}{(t_{c2} - t_{c1})}$$

Avec $V_{OFF2}$ : la valeur du signal au deuxième instant de début correction $t_{c2}$,

$t_{c2}$ : deuxième instant de début de correction,

- lors de l'étape VI : le signal $S_B$ est corrigé par l'unité de traitement 500, à un instant donné *i,* situé après le deuxième instant de début de correction $t_{c2}$ afin d'obtenir un deuxième signal traité S' tel que :

$$S'(i) = S(i) - A * i$$

Avec S'(i) : le deuxième signal traité à l'instant i,

S (i) : le premier signal traité à l'instant i.

Le deuxième instant de début de correction tc2 se situe donc dans la phase de plateau après le troisième pic de pression de combustion P2.

On aura compris que la valeur de la pente A ne peut être calculée qu'après le troisième pic de pression de combustion P2, c'est-à-dire après deux mesures de durée (Dt1, Dt2). Le calcul de la pente A n'est pas possible dès le deuxième pic de pression de combustion P1.

Dans un mode de réalisation particulier, la valeur de la deuxième constante x2 est égale à la valeur de la première constante x1.

De même, pour ce deuxième mode de réalisation, il est considéré que la valeur de la pente A calculée entre le deuxième pic de pression de combustion P1 et le troisième pic de pression de combustion P2 est identique à celle entre le troisième pic de pression de combustion P2 et le pic de pression de combustion suivant. Comme expliqué précédemment, cette pente A est due à des phénomènes thermiques relativement lents, et l'hypothèse est émise que la pente n'évolue pas entre deux cycles successifs. Un cycle étant définis par deux pics de pression de combustion consécutifs séparés par une phase de plateau.

Ainsi, la valeur de la pente A calculée entre deux pics de pression consécutifs (P1, P2), plus précisément à partir des données sur trois cycles consécutifs, est utilisée pour corriger le signal $S_B$ se situant après le troisième pic de pression, selon l'équation :

$$S'(i) = S(i) - A * i$$

La figure 3 représente selon le temps t, le deuxième signal traité S'. Les valeurs du signal $S_B$ pendant les phases de plateau (après le deuxième instant de début de correction $t_{c2}$) ont une valeur constante et répétable à la valeur de référence $V_{REF}$ et n'évoluent plus selon une fonction linéaire de pente A. La détermination de la pente A sur trois cycles consécutifs permet donc d'obtenir des phases de plateaux horizontaux, de valeur constante.

Dans un mode de réalisation préférentiel de l'invention, la détection des pics de pression de combustion (étape II) ainsi que le calcul de la durée entre deux pics de pression consécutifs (étape III) sont réalisés de la façon suivante :

- l'étape II consiste en une dérivation du deuxième ordre des valeurs de tension du signal $S_B$ par rapport à une unité de temps t, afin d'obtenir un signal dérivé $S_D$, c'est-à-dire :

$$S_D = \frac{dS_B^2}{dt^2}$$

- l'étape III consiste en :

  • la détection de deux instants consécutifs, un premier instant t0, (ou respectivement un deuxième instant t1) et un deuxième instant t1 (ou respectivement un troisième instant t2) correspondants au passage des valeurs du signal dérivé $S_D$ en dessous d'un seuil S1,

  • le calcul d'une durée (Dt1, Dt2) entre le premier instant t0 et le deuxième instant t1 (respectivement entre le deuxième instant t1 et le troisième instant t2).

Cette détection des pics de pression de combustion s'applique aussi au calcul de la deuxième durée Dt2 entre le deuxième instant t1 et le troisième instant t2. La figure 5 représente selon le temps t, le signal dérivé $S_D$, obtenu à l'étape II, ainsi que les instants t0, t1 de passage des valeurs du signal dérivé $S_D$ en dessous du seuil S1.

Le seuil S1 est déterminé, de manière judicieuse, de telle sorte qu'au premier instant t0, au deuxième instant t1 et au troisième instant t2, la valeur du signal $S_B$ est sensiblement maximale, cependant située après le pic de pression. Les instants t0, t1, t2 correspondent ainsi à des instants situés immédiatement après des pic de pression de combustion (P0, P1, P2). En effet le seuil S1 doit être fixé de manière à distinguer des points situés avant un pic de pression des points situés après un pic de pression. Comme illustré à la figure 5, le seuil S1 est de valeur relativement basse et permet donc de détecter des points situés juste après un pic de pression.

Le procédé de traitement du signal selon l'invention permet donc d'obtenir un signal traité (S ou S') représentatif de la pression régnant dans la chambre de combustion d'un cylindre, ne présentant pas, après le pic de pression une sous estimation de la valeur de la pression régnant dans le cylindre, ne demandant pas de calculs complexes nécessitant une taille mémoire importante dans l'ASIC associé audit capteur, comme c'est le cas pour l'art antérieur, et facile à mettre en oeuvre, puisqu'il suffit de calibrer une fois pour toutes la valeur des constantes x1 et x2.

Bien sûr, l'invention ne se limite pas aux modes de réalisation décrits, donnés uniquement à titre d'exemple non limitatif.

**Revendications**

1.  Procédé de traitement d'un signal d'un dispositif de mesure de pression ($D_P$) au sein d'un moteur à combustion interne, ledit dispositif comprenant :

    - un capteur de mesure de pression (800) fournissant en sortie un signal ($S_B$) de tension représentatif de la pression au sein du moteur à combustion interne, le signal ($S_B$) comprenant des phases dites « de plateau » pendant lesquelles la tension évolue selon une fonction sensiblement linéaire en fonction du temps, et des pics de tension, représentatifs des pics de pression de combustion.
    - une unité de traitement (500) reliée audit capteur de mesure de pression (800), le procédé comprenant les étapes suivantes :

        I. acquisition des valeurs du signal ($S_B$) par l'unité de traitement (500),
        II. Détection par l'unité de traitement (500) des pics de tension du signal ($S_B$), représentatifs des pics de pression de combustion.

    le procédé étant **caractérisé en ce qu'**il comprend en outre les étapes suivantes :

        III. Calcul par l'unité de traitement (500) d'une première durée (Dt1) entre un premier instant (t0) correspondant à un premier pic de pression de combustion (P0) et un deuxième instant (t1) correspondant à un deuxième pic de pression de combustion (P1), consécutif au premier pic de pression de combustion (P0),
        IV. Calcul par l'unité de traitement (500) d'un instant de début de correction ($t_{c1}$) défini par :

$$t_{c1} = t1 + x1 * Dt1$$

Avec :

    $t_{c1}$ : instant de début de correction,
    t1 : deuxième instant correspondant à un deuxième pic de pression de combustion,
    Dt1 : première durée entre le premier instant (t0) et le deuxième instant (t1),
    x1 : première constante de valeur variant entre 0,1 et 0,9.

        V. Mesure par l'unité de traitement (500) d'une valeur du signal ($V_{OFF1}$) à l'instant de début correction ($t_{c1}$),
        VI. Correction par l'unité de traitement (500) du signal ($S_B$), à partir de l'instant de début de correction ($t_{c1}$) par rapport à une valeur de référence ($V_{REF}$) et obtention d'un premier signal traité (S) tel que :

$$S = S_B - V_{OFF1} + V_{REF}$$

Avec $S_B$ : signal en sortie du capteur de mesure de pression,
$V_{OFF1}$ valeur du signal à l'instant de début correction ($t_{c1}$),
$V_{REF}$ : valeur de référence.

2.  Procédé de traitement du signal selon la revendication 1, **caractérisé en ce que** :

    - lors de l'étape III : Calcul par l'unité de traitement (500) d'une deuxième durée (Dt2) entre le deuxième instant (t1) correspondant au deuxième pic de pression de combustion (P1) et un troisième instant (t2) correspondant à un troisième pic de pression de combustion (P2), consécutif au deuxième pic de pression de combustion (P1),
    - lors de l'étape IV : Calcul par l'unité de traitement (500) d'un deuxième instant de début de correction ($t_{c2}$) défini par :

$$t_{c2} = t2 + x2 * Dt2$$

Avec :

    $t_{c2}$ : deuxième instant de début de correction,
    t2 : troisième instant correspondant à un troisième pic de pression de combustion,
    Dt2 : deuxième durée entre le deuxième instant (t1) et le troisième instant (t2),
    x2 : deuxième constante de valeur variant entre 0,1 et 0,9,

    - lors de l'étape V : Mesure par l'unité de traitement (500) d'une deuxième valeur du signal ($V_{OFF2}$) au deuxième instant de début correction ($t_{c2}$), et calcul par l'unité de traitement (500) d'une pente (A), définie par :

$$A = \frac{(V_{OFF2} - V_{OFF1})}{(t_{c2} - t_{c1})}$$

Avec $V_{OFF2}$ : valeur du signal au deuxième instant de début correction ($t_{c2}$),
$t_{c2}$ : deuxième instant de début de correction,

- lors de l'étape VI : correction du signal ($S_B$) par l'unité de traitement (500), à un instant donné (*i*), situé après le deuxième instant de début de correction ($t_{c2}$) et obtention d'un deuxième signal traité (S') tel que :

$$S'(i) = S(i) - A * i$$

Avec S'(i) : deuxième signal traité à l'instant i,

S (i) : premier signal traité à l'instant i.

3. Procédé de traitement selon la revendication 2, **caractérisé en ce que** la valeur de la deuxième constante x2 est égale à la valeur de la première constante x1.

4. Procédé de traitement selon l'une quelconque des revendications précédentes, **caractérisé en ce que** :

- l'étape II consiste en la dérivation du deuxième ordre des valeurs du signal ($S_B$) par rapport à une unité de temps (t), et obtention d'un signal dérivé ($S_D$), tel que :

$$S_D = \frac{dS_B^2}{dt^2}$$

avec $S_D$ : signal dérivé,
- l'étape III consiste en :

• la détection par l'unité de traitement (500) de deux instants consécutifs, [(t0, t1), (t1, t2)] correspondants au passage des valeurs du signal dérivé ($S_D$) en dessous d'un seuil (S1),
• le calcul par l'unité de traitement (500) d'une durée (Dt1, Dt2) entre ces deux instants consécutifs [(t0, t1), (t1, t2)].

5. Procédé de traitement selon la revendication 4, **caractérisé en ce que**, la valeur du seuil (S1) est déterminée de telle sorte qu'aux instants détectés (t0, t1, t2) la valeur du signal (P0, P1, P2) est sensiblement maximale.

6. Procédé selon l'une quelconque des revendications précédentes, caractérisé en ce le signal ($S_B$) est un signal filtré et échantillonné par rapport au temps.

7. Procédé de traitement selon les revendications 1 à 6, **caractérisé en ce que** la valeur de la première constante x1 est déterminée à un régime moteur maximal.

8. Procédé de traitement selon la revendication 7, **caractérisé en ce que** la valeur du régime moteur maximale est de 5000 tours /min.

9. Procédé de traitement selon les revendications 1 à 5, **caractérisé en ce que** la valeur de la première constante x1 varie entre 0,4 et 0 ,7.

**Patentansprüche**

1. Verfahren zur Verarbeitung eines Signals einer Druckmessvorrichtung ($D_P$) innerhalb eines Verbrennungsmotors, wobei die Vorrichtung enthält:

- einen Druckmesssensor (800), der am Ausgang ein Spannungssignal ($S_B$) liefert, das für den Druck innerhalb des Verbrennungsmotors repräsentativ ist, wobei das Signal ($S_B$) so genannte « Plateau »-Phasen, während denen die Spannung sich gemäß einer im Wesentlichen linearen Funktion abhängig von der Zeit entwickelt, und Spannungsspitzen enthält, die für die Verbrennungsdruckspitzen repräsentativ sind,
- eine Verarbeitungseinheit (500), die mit dem Druckmesssensor (800) verbunden ist,

wobei das Verfahren die folgenden Schritte enthält:

I. Erfassung der Werte des Signals ($S_B$) durch die Verarbeitungseinheit (500),
II. Erkennung durch die Verarbeitungseinheit (500) der Spannungsspitzen des Signals ($S_B$), die für die Verbrennungsdruckspitzen repräsentativ sind,

wobei das Verfahren **dadurch gekennzeichnet ist, dass** es außerdem die folgenden Schritte enthält:

III. Berechnung durch die Verarbeitungseinheit (500) einer ersten Dauer (Dt1) zwischen einem ersten Zeitpunkt (t0) entsprechend einer ersten Verbrennungsdruckspitze (P0) und einem zweiten Zeitpunkt (t1) entsprechend einer zweiten Verbrennungsdruckspitze (P1) nach der ersten Verbrennungsdruckspitze (P0),
IV. Berechnung durch die Verarbeitungseinheit (500) eines Korrekturbeginnzeitpunkts ($t_{c1}$) definiert durch:

$$t_{c1} = t1 + x1 * Dt1$$

mit:

$t_{c1}$ : Korrekturbeginnzeitpunkt,

t1 : zweiter Zeitpunkt entsprechend einer zweiten Verbrennungsdruckspitze,

Dt1 : erste Dauer zwischen dem ersten Zeitpunkt (t0) und dem zweiten Zeitpunkt (t1),

x1 : erste Konstante eines zwischen 0,1 und 0,9 variierenden Werts,

V. Messung durch die Verarbeitungseinheit (500) eines Werts des Signals ($V_{OFF1}$) zum Korrekturbeginnzeitpunkt ($t_{c1}$),

VI. Korrektur durch die Verarbeitungseinheit (500) des Signals ($S_B$) ausgehend vom Korrekturbeginnzeitpunkt ($t_{c1}$) bezüglich eines Bezugswerts ($V_{REF}$) und Erhalt eines ersten verarbeiteten Signals (S) derart, dass gilt:

$$S = S_B - V_{OFF1} + V_{REF}$$

mit:

$S_B$ : Ausgangssignal des Druckmesssensors,

$V_{OFF1}$ : Wert des Signals zum Korrekturbeginnzeitpunkt ($t_{c1}$),

$V_{REF}$ : Bezugswert.

2. Verarbeitungsverfahren des Signals nach Anspruch 1, **dadurch gekennzeichnet, dass**:

- im Schritt III: Berechnung durch die Verarbeitungseinheit (500) einer zweiten Dauer (Dt2) zwischen dem zweiten Zeitpunkt (t1) entsprechend der zweiten Verbrennungsdruckspitze (P1) und einem dritten Zeitpunkt (t2) entsprechend einer dritten Verbrennungsdruckspitze (P2) nach der zweiten Verbrennungsdruckspitze (P1),

- im Schritt IV: Berechnung durch die Verarbeitungseinheit (500) eines zweiten Korrekturbeginnzeitpunkts ($t_{c2}$) definiert durch:

$$t_{c2} = t2 + x2 * Dt2$$

mit:

$t_{c2}$ : zweiter Korrekturbeginnzeitpunkt,

t2 : dritter Zeitpunkt entsprechend einer dritten Verbrennungsdruckspitze,

Dt2 : zweite Dauer zwischen dem zweiten Zeitpunkt (t1) und dem dritten Zeitpunkt (t2),

x2 : zweite Konstante eines zwischen 0,1 und 0,9 variierenden Werts,

- im Schritt V: Messung durch die Verarbeitungseinheit (500) eines zweiten Werts des Signals ($V_{OFF2}$) zum zweiten Korrekturbeginnzeitpunkt ($t_{c2}$), und Berechnung durch die Verarbeitungseinheit (500) einer Steilheit (A), definiert durch:

$$A = \frac{(V_{OFF2} - V_{OFF1})}{(t_{c2} - t_{c1})}$$

mit:

$V_{OFF2}$ : Wert des Signals zum zweiten Korrekturbeginnzeitpunkt ($t_{c2}$),

$t_{c2}$ : zweiter Korrekturbeginnzeitpunkt,

- im Schritt VI: Korrektur des Signals ($S_B$) durch die Verarbeitungseinheit (500) zu einem gegebenen Zeitpunkt (i), der sich nach dem zweiten Korrekturbeginnzeitpunkt ($t_{c2}$) befindet, und Erhalt eines zweiten verarbeiteten Signals (S'), derart, dass gilt:

$$S'(i) = S(i) - A * i$$

mit:

S'(i) : zweites verarbeitetes Signal zum Zeitpunkt i,

S(i) : erstes verarbeitetes Signal zum Zeitpunkt i.

3. Verarbeitungsverfahren nach Anspruch 2, **dadurch gekennzeichnet, dass** der Wert der zweiten Konstanten x2 gleich dem Wert der ersten Konstanten x1 ist.

4. Verarbeitungsverfahren nach einem der vorhergehenden Ansprüche, **dadurch gekennzeichnet, dass**:

- der Schritt II in der Ableitung zweiter Ordnung der Werte des Signals ($S_B$) bezüglich einer Zeiteinheit (t) und dem Erhalt eines abgeleiteten Signals ($S_D$) besteht, derart, dass gilt:

$$S_D = \frac{dS_B^2}{dt^2}$$

mit $S_D$ : abgeleitetes Signal,

- der Schritt III besteht aus:

• der Erkennung durch die Verarbeitungseinheit (500) von zwei aufeinanderfolgenden Zeitpunkten, [(t0, t1), (t1, t2)], die dem Übergang der Werte des abgeleiteten Signals ($S_D$) unter eine Schwelle (S1) entsprechen,
• der Berechnung durch die Verarbeitungseinheit (500) einer Dauer (Dt1, Dt2) zwischen diesen zwei aufeinanderfolgenden Zeitpunkten [(t0, t1), (t1, t2)].

5. Verarbeitungsverfahren nach Anspruch 4, **dadurch gekennzeichnet, dass** der Wert der Schwelle (S1) so bestimmt wird, dass zu den erkannten Zeitpunkten (t0, t1, t2) der Wert des Signals (P0, P1, P2) im Wesentlichen maximal ist.

6. Verarbeitungsverfahren nach einem der vorhergehenden Ansprüche, **dadurch gekennzeichnet, dass** das Signal ($S_B$) ein bezüglich der Zeit gefiltertes und abgetastetes Signal ist.

7. Verarbeitungsverfahren nach den Ansprüchen 1 bis 6, **dadurch gekennzeichnet, dass** der Wert der ersten Konstanten x1 bei einer maximalen Motordrehzahl bestimmt wird.

8. Verarbeitungsverfahren nach Anspruch 7, **dadurch gekennzeichnet, dass** der Wert der maximalen Motordrehzahl 5000 Umdrehungen/Min beträgt.

9. Verarbeitungsverfahren nach den Ansprüchen 1 bis 5, **dadurch gekennzeichnet, dass** der Wert der ersten Konstanten x1 zwischen 0,4 und 0,7 variiert.


**Claims**

1. Method for processing a signal of a pressure measuring device ($D_P$) inside an internal combustion engine, said device including:

   - a pressure measuring sensor (800) supplying an output voltage signal ($S_B$) representing the pressure within the internal combustion engine, the signal ($S_B$) including "plateau" phases during which the voltage changes according to a more or less linear function as a function of time, and voltage peak phases representing the combustion pressure peaks,
   - a processing unit (500) connected to said pressure measuring sensor,

   the method including the following steps:

   I. Acquisition of the values of the signal ($S_B$) by the processing unit (500),
   II. Detection by the processing unit (500) of the voltage peaks of the signal ($S_B$) representing the combustion pressure peaks.

the method being **characterized in that** it furthermore includes the following steps:

   III. Calculation by the processing unit (500) of a first duration (Dt1) between a first time (t0) corresponding to a first combustion pressure peak (P0) and a second time (t1) corresponding to a second combustion pressure peak (P1), consecutive to the first combustion pressure peak (P0),
   IV. Calculation by the processing unit (500) of a correction start time ($t_{c1}$) defined by:

$$t_{c1} = t1 + x1 * Dt1$$

   Where:

   $t_{c1}$ is the correction start time,
   t1 is a second time corresponding to a second combustion pressure peak,
   Dt1 is a first duration between the first time (t0) and
   the second time (t1),
   x1 is a first constant with a value varying between 0.1
   and 0.9.

   V. Measurement by the processing unit (500) of a value of the signal ($V_{OFF1}$) at the correction start time ($t_{c1}$),
   VI. Correction by the processing unit (500) of the signal ($S_B$), on the basis of the correction start time ($t_{c1}$) in relation to a reference value ($V_{REF}$), and obtaining of a first processed signal (S) such that:

$$S = S_B - V_{OFF1} + V_{REF}$$

   Where $S_B$ is the signal at the pressure measuring sensor output,
   $V_{OFF1}$ is the value of the signal at the correction start time ($t_{c1}$),
   $V_{REF}$ is the reference value.

2. Signal processing method according to Claim 1, **characterized in that**:

   - during step III: Calculation by the processing unit (500) of a second duration (Dt2) between the second time (t1) corresponding to the second combustion pressure peak (P1) and a third time (t2) corresponding to a third combustion pressure peak (P2), consecutive to the second combustion pressure peak (P1),
   - during step IV: Calculation by the processing unit (500) of a second correction start time ($t_{c2}$) defined by:

$$t_{c2} = t2 + x2 * Dt2$$

Where:

$t_{c2}$ is the second correction start time,
t2 is a third time corresponding to a third combustion pressure peak,
Dt2 is a second duration between the second time (t1) and
the third time (t2),
x2 is a second constant with a value varying between 0.1 and 0.9.

- during step V: Measurement by the processing unit (500) of a second value of the signal ($V_{OFF2}$) at the second correction start time ($t_{c2}$), and calculation by the processing unit (500) of a slope (A), defined by:

$$A = \frac{(V_{OFF2} - V_{OFF1})}{(t_{c2} - t_{c1})}$$

Where $V_{OFF2}$ is the value of the signal at the second correction start time ($t_{c2}$),
$t_{c2}$ is the second correction start time,

- during step VI: Correction of the signal ($S_B$) by the processing unit (500), at a given time (i), located after the second correction start time ($t_{c2}$) and obtaining of a second processed signal (S') such that:

$$S'(i) = S(i) - A * i$$

Where S'(i) is the second processed signal at the time i.
S (i) is the first processed signal at the time i,

3. Processing method according to Claim 2, **characterized in that** the value of the second constant x2 is equal to the value of the first constant x1.

4. Processing method according to any one of the preceding claims, **characterized in that**:

- step II consists in the second-order offset of the values of the signal ($S_B$) in relation to a time unit (t), and obtaining of an offset signal ($S_D$), such that:

$$S_D = \frac{dS_B^2}{dt^2}$$

where $S_D$ is the offset signal,
- step III consists in:

• the detection by the processing unit (500) of two consecutive times [(t0, t1), (t1, t2)] corresponding to the passage of the values of the offset signal ($S_D$) below a threshold (S1),
• the calculation by the processing unit (500) of a duration (Dt1, Dt2) between these two consecutive times [(t0, t1), (t1, t2)].

5. Processing method according to Claim 4, **characterized in that** the value of the threshold (S1) is determined in such a way that, at the detected times (t0, t1, t2), the value of the signal (P0, P1, P2) is more or less maximum.

6. Method according to any one of the preceding claims, **characterized in that** the signal ($S_B$) is a signal filtered and sampled in relation to the time.

7. Processing method according to Claims 1 to 6, **characterized in that** the value of the first constant x1 is determined at a maximum engine speed.

8. Processing method according to Claim 7, **characterized in that** the maximum engine speed value is 5000 rpm.

9. Processing method according to Claims 1 to 5, **characterized in that** the value of the first constant x1 varies between 0.4 and 0.7.

## Fig 1A

## Fig 1B

## Fig 2

## Fig 3

14

## Fig 4

## Fig 5

**EP 2 898 306 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2938645 A1

- EP 1574834 A1